# EUROPÄISCHE PATENTSCHRIFT

(11) **EP 4 214 477 B1**
(45) Veröffentlichungstag und Bekanntmachung des Hinweises auf die Patenterteilung: **01.10.2025**
(21) Anmeldenummer: 21763307.2
(22) Anmeldetag: 16.08.2021
(51) Int. Cl.: G01F 23/284, G01F 23/296, G01S 13/88, G01S 15/88, G01F 25/20, G01S 7/40

(54) **KALIBRATION UND FERTIGUNG VON MODULAR AUFGEBAUTEN FÜLLSTANDSMESSGERÄTEN**
CALIBRATION AND ASSEMBLY OF MODULAR LEVEL SENSING DEVICES
ÉTALONNAGE ET ASSEMBLAGE DES DISPOSITIFS DE DÉTECTION DE NIVEAU MODULAIRES

(30) Priorität: 17.09.2020 DE 102020124299
(43) Veröffentlichungstag der Anmeldung: 26.07.2023
(73) Patentinhaber: Endress+Hauser SE+Co. KG, 79689 Maulburg (DE)
(72) Erfinder: KARWECK, Lars, 79589 Binzen (DE); ARMBRUSTER, Ralf, 79227 Schallstadt (DE); SCHLACHTER, Marc Andreas, 79664 Wehr (DE)
(74) Vertreter: Endress + Hauser Group Services (Deutschland) AG+Co. KG
(86) Internationale Anmeldenummer: PCT/EP2021/072676
(87) Internationale Veröffentlichungsnummer: WO 2022/058101

(56) Entgegenhaltungen:
- EP-A1- 1 128 169
- WO-A1-2004/017025
- DE-A1- 102004 035 097
- US-B2- 9 581 485
- US-B2- 9 599 501

## Beschreibung

Die Erfindung betrifft ein Verfahren zur Fertigung und Kalibration modular aufgebauter Füllstandsmessgeräte.

In der Automatisierungstechnik, insbesondere zur Prozessautomatisierung werden vielfach Feldgeräte eingesetzt, die zur Erfassung diverser Messgrößen dienen. Bei der zu bestimmenden Messgröße kann es sich beispielsweise um einen Füllstand, einen Durchfluss, einen Druck, die Temperatur, den pH-Wert, das Redoxpotential, eine Leitfähigkeit oder den Dielektrizitätswert eines Mediums in einer Prozessanlage handeln. Zur Erfassung der entsprechenden Messwerte umfassen die Feldgeräte jeweils geeignete Sensoren bzw. basieren auf geeigneten Messprinzipien. Eine Vielzahl verschiedener Feldgeräte-Typen wird von der Firmen-Gruppe Endress + Hauser hergestellt und vertrieben.

Zur Füllstandsmessung von Füllgütern in Behältern haben sich kapazitive- sowie Radar- und Ultraschall-basierte Messprinzipien etabliert, da sie robust und wartungsarm sind. Ein zentraler Vorteil dieser Messprinzipien besteht in der Fähigkeit, den Füllstand quasi kontinuierlich messen zu können. Dabei bezieht sich der Begriff *"Ultraschall"* im Rahmen dieser Erfindung auf Schall-Wellen in einem Frequenzbereich zwischen 14 KHz und 1 GHz. Der Begriff "Radar" bezieht sich auf Radar-Signale mit Frequenzen zwischen 0.03 GHz und 300 GHz, wobei übliche Radar-Frequenzbänder, bei denen Füllstandsmessung durchgeführt wird, beispielsweise bei 2 GHz, 26 GHz, 79 GHz, oder 120 GHz liegen. Bei Verwendung von Ultraschall bildet die Messung der Puls-Laufzeit das gängige MessPrinzip. Im Falle von Radar bildet neben dem Puls-Laufzeit-Prinzip (auch unter dem Begriff *"Pulsradar"* bekannt) das FMCW-Prinzip (*"Frequency Modulated Continuous Wave"*) das gängige Messprinzip zur Bestimmung des Abstandes bzw. des Füllstandes. Ein Füllstandsmessgerät, welches nach dem Puls-Laufzeit-Verfahren arbeitet, ist beispielsweise in der Offenlegungsschrift DE 10 2012 104 858 A1 beschrieben. Bezüglich eines typischen Aufbaus von FMCW-basierten Füllstandsmessgeräten sei exemplarisch auf die Offenlegungsschrift DE 10 2013 108 490 A1 verwiesen. Näher beschrieben werden die Messprinzipien von FMCW und Pulsradar außerdem in *"*Radar Level Detection, Peter Devine, 2000*".*

Neben frei abstrahlendem Radar, bei dem das Radar-Signal gemäß des Puls-Laufzeit-Prinzips oder gemäß des FMCW-Prinzips über eine Antenne in Richtung des Füllgutes gesendet bzw. von dort empfangen wird, ist außerdem auch das geführte Radar (besser bekannt *als "TDR, Time Domain Reflectometry"*) kommerziell erhältlich. Hierbei wird das Radar-Signal nicht über eine Antenne ausgestrahlt, sondern in eine elektrisch leitfähige Messsonde eingekoppelt, die sich in etwa senkrecht in das Füllgut bis knapp oberhalb des Behälterbodens erstreckt. Dabei wird auch bei TDR das Radar-Signal Prinzip-bedingt in der Messsonde auf Höhe der Füllgut-Oberfläche reflektiert, so dass gemäß des reflektierten Empfangssignals der Füllstand bestimmt werden kann.

Analog zu geführtem Radar wird auch bei kapazitiven Messprinzipien eine Messsonde zur Füllstandsmessung verwendet. Dabei wird im Falle des kapazitiven Messprinzips der Effekt genutzt, dass die Kapazität der Messsonde vom Füllstand abhängig ist. Zur Bestimmung der Kapazität wird ein Wechselspannungssignal in die Messsonde eingekoppelt und anhand der entsprechend ermittelten Empfangsgröße, wie beispielsweise einer Impedanz oder einer Resonanzfrequenz, der Füllstand bestimmt.

Kapazitive-, Radar- und Ultraschall-basierte Füllstandsmessgeräte haben gemeinsam, dass sie oftmals modular aufgebaut sind, bestehend aus dem eigentlichen Sensor-Modul, einem Übertragungs-Modul und einem Elektronik-Modul. Hierdurch ist es möglich, diverse Füllstandsmessgeräte- bzw. Feldgeräte-Typen auf Basis eines gemeinsamen Elektronik-Moduls aufzubauen. Dabei dient das Elektronik-Modul bei Feldgeräten im Wesentlichen dazu, die vom spezifischen Sensor-Modul erhaltenen Sensorsignale in ein standardisiertes Messwertsignal umzuwandeln, das in der jeweiligen Prozessanlage verwendet wird. Oftmals wird als Standard beispielsweise 4-20 mA gemäß der Norm DIN-IEC 60381-1 verwendet. Im Sensor-Modul ist wiederum das jeweilige Messprinzip zur Ermittlung des Abstandes zum Füllgut implementiert, so dass das Sensor-Modul den Abstandswert in Form eines entsprechenden Sensorsignals ausgeben kann. Dabei erzeugt das Sensor-Modul das Sensorsignal häufig bereits als digitales Signal. Dementsprechend ist das Elektronik-Modul ausgelegt, das digitale Sensorsignal empfangen bzw. zu verarbeiten.

Die Auslegung des Übertragungs-Moduls richtet sich nach dem im Sensor-Modul implementierten Messprinzip: Im Falle von frei abstrahlendem Radar (FMCW und Puls-Laufzeit-Messung) besteht das Übertragungs-Modul im Wesentlichen aus einer auf die Frequenz angepassten Antenne, in welche das Radar-Signal beispielsweise über einen Hohlleiter eingekoppelt wird. Im Falle des kapazitiven Messprinzips und im Falle von geführtem Radar wird das Übertragungs-Modul in Form einer elektrisch leitfähigen Sonde realisiert, die sich im monierten Zustand in den Behälter erstreckt. Bei Implementierung von Ultraschall fungiert das Übertragungs-Modul quasi als Lautsprecher bzw. Mikrophon und umfasst zur Aus- und Einkopplung des Signals beispielsweise ein Piezo-Element.

Insbesondere bei eichpflichtigen Anwendungen ist es notwendig, für das gefertigte Füllstandsmessgerät ein so genanntes Kalibrierprotokoll zu erstellten. Hierbei handelt es sich um den Hersteller-seitigen Nachweis, dass das Messgerät im Rahmen der geforderten Fehlertoleranz korrekt misst. Dementsprechend wird das Kalibrierprotokoll erstellt, indem bei einer entsprechenden Messreihe die eingestellten Füllstände (bzw. die eingestellten Abstände zu einem Reflektor auf einer Kalibrations-Messstrecke) mit den vom Füllstandsmessgerät ermittelten Füllstands-Messwerten abgeglichen bzw. gegenübergestellt werden.

Die WO 2004/017025 A1 beschriebt ein Verfahren zur Fertigung und Kalibration eines modular aufgebauten Füllstandsmessgerätes gemäß dem Stand der Technik, wobei die Funktionalität der Kalibration des Sensor-Moduls in einem Elektronik-Modul inbegriffen ist.

Da die einzelnen Module getrennt voneinander gefertigt werden, während die Kalibration bzw. das Kalibrierprotokoll für das gesamte Füllstandsmessgerät auszustellen ist, bedingt dies einen logistisch entsprechend aufwändigen Kalibrierprozess. Der Erfindung liegt daher die Aufgabe zugrunde, einen logistisch vereinfachten Fertigungs- und Kalibrations-Prozess für kontinuierlich messende Füllstandsmessgeräte zu erreichen.

Die Erfindung löst diese Aufgabe durch ein Verfahren zur Fertigung und Kalibration eines modular aufgebauten Füllstandsmessgerätes, welches Verfahren im Anspruch 1 spezifiziert ist und welches Verfahren einem Ultraschall- oder Radar-basierten Messprinzip beruht und folgende Module umfasst:
- Ein Übertragungs-Modul, in welches ein Wechselspannungs-Signal derart einkoppelbar ist, so dass das Wechselspannungs-Signal in Richtung des Füllgutes bzw. eines Reflektors übertragen und nach Reflektion als entsprechende Empfangsgröße empfangen wird,
- ein Sensor-Modul, mit
   ∘ Einer Signalerzeugungs-Einheit, die ausgelegt ist, das Wechselspannungs-Signal gemäß des entsprechenden Messprinzips zu erzeugen, und
   ∘ einer Auswertungs-Einheit, die ausgelegt ist, um die Empfangsgröße mittels einer Kalibrierfunktion in ein Sensorsignal umzuwandeln, das einen Abstand des Füllstandsmessgerätes zum Reflektor repräsentiert, und
- ein Elektronik-Modul, das ausgelegt ist, das Sensorsignal unter Einbezug einer bekannten Einbauhöhe in ein standardisiertes Messwertsignal (beispielsweise gemäß des 4-20 mA Standards) umzuwandeln, das den Füllstand repräsentiert, mit
   ∘ einer ersten Schnittstelle zur Auswertungs-Einheit, um das Sensorsignal zu empfangen, und
   ∘ einer zweiten Schnittstelle, die ausgelegt ist, das Messwertsignal an eine übergeordnete Einheit auszugeben.

Der Begriff *"Reflektor"* bezieht sich im Rahmen der Erfindung auf eine Kalibrier-Messstrecke und definiert sich je nach implementiertem Messprinzip gegebenenfalls verschieden: Im Falle von frei abstrahlendem Radar und Ultraschall handelt es sich um eine reflektierende Oberfläche wie beispielsweise eine Platte auf einer Kalibrier-Messstrecke. Im Falle des geführten Radars und des kapazitiven Messprinzips definiert sich der Begriff *"Reflektor"* beispielsweise als Klemme, welche die Messsonde nach einer entsprechenden Strecke abklemmt.

Das erfindungsgemäße Verfahren umfasst zumindest folgende Verfahrensschritte:
- Verbinden des Übertragungs-Moduls mit dem Sensor-Modul,
- Anschließende Kalibration des Sensor-Moduls auf einer geeigneten Kalibrier-Messstrecke, indem
   ∘ das Wechselspannungs-Signal bei zumindest einem definierten Abstand des Füllstandsmessgerätes zum Reflektor hin ausgesendet bzw. übertragen wird,
   ∘ jeweils die entsprechende Empfangsgröße erfasst wird, und
   ∘ auf Basis der zumindest einen erfassten Empfangsgröße und des jeweils korrespondierenden Abstands die Kalibrierfunktion erstellt wird,
- Einlernen des Elektronik-Moduls, indem
   ∘ die Einbauhöhe des Füllstandsmessgerätes beispielsweise über ein Touchscreen-Moduls eingegeben wird.

Erfindungsgemäß vereinfacht dieses Verfahren den Fertigungsprozess des Füllstandsmessgerätes, da das Elektronik-Modul zum Zeitpunkt der Kalbration des Sensor-Moduls nicht angeschlossen ist, sondern erst bei der Endmontage oder spätestens am Einsatzort.

Die Kalibration des Sensor-Moduls wird potenziell umso exakter, je mehr Abstände und korrespondierende Empfangsgrößen zur Erstellung der Kalibrierungsfunktion herangezogen werden. Daher ist es vorteilhaft, wenn das Wechselspannungs-Signal bei zwei oder mehreren definierten Abständen des Füllstandsmessgerätes zum Reflektor übertragen wird, bzw. wenn die Kalibrierfunktion auf Basis dieser Abstände und der korrespondierenden Empfangsgrößen erstellt wird.

Auf Basis dieses Verfahrens kann erfindungsgemäß ein Kalibrierprotokoll erstellt werden, indem
∘ das auszusendende Signal bei zumindest einem definiert eingestellten Abstand zum Reflektor übertragen und nach Reflektion die entsprechende Empfangsgröße empfangen wird,
∘ anhand der Empfangsgröße und der im Sensor-Modul hinterlegten Kalibrierfunktion das Sensorsignal erzeugt wird,
∘ das Sensorsignal unter Einbezug der voraussichtlichen Einbauhöhe in das standardisierte Messwertsignal umgewandelt wird, und
∘ indem der zumindest eine Füllstand, der durch das Messwertsignal repräsentiert wird, mit dem eingestellten Abstand bzw. dem korrespondierenden Füllstandswert abgeglichen wird.

Hierbei wird das vom Sensor-Modul erzeugte Sensorsignal insbesondere auf einer externen Speicher-Einheit gespeichert, so dass die Sensorsignale dem Elektronik-Modul von der externen Speicher-Einheit beispielsweise über die erste Schnittstelle übermittelt wird. Vorteilhaft an dieser erfindungsgemäßen Erstellung des Kalibrierprotokolls ist, dass das Elektronik-Modul und das Sensor-Modul zum Zeitpunkt der Erstellung des Kalibrierprotokolls wiederum nicht miteinander verbunden sein müssen.

Die Kalibration des Sensor-Moduls kann verbessert werden, sofern zusätzlich eine Temperaturkompensation durchgeführt wird. Dabei kann die Temperaturkompensation durchgeführt werden, indem
∘ das Wechselspannungs-Signal bei zumindest einem definierten Abstand unter zumindest zwei verschiedenen Temperaturen erzeugt wird - das Sensor-Modul kann hierzu beispielsweise in einer Klimakammer betrieben werden -,
∘ nach Reflektion die jeweils entsprechende Empfangsgröße erfasst wird,
∘ und indem zumindest anhand der Empfangsgrößen und anhand der korrespondierenden Temperaturen eine Kompensationsfunktion erstellt wird.

Im späteren Messbetrieb kann die Temperaturkompensation angewendet werden, sofern das Sensor-Modul einen Temperatur-Sensor umfasst, mittels dem die Umgebungstemperatur gemessen werden kann. In diesem Fall kann die Sensoreinheit die Sensorsignale mittels der Kompensationsfunktion und der gemessenen Umgebungstemperatur temperaturkompensiert ausgeben.

Unter den Begriffen *"Modul"* und *"Einheit"* werden im Rahmen der Erfindung prinzipiell jegliche elektrische Schaltung und jeglicher Sensor verstanden, welche für den angedachten Einsatzzweck geeignet ausgelegt sind. Es kann sich also je nach Anforderung um eine Analogschaltung zur Erzeugung bzw. Verarbeitung entsprechender analoger Signale handeln. Es kann sich jedoch auch um eine Digitalschaltung wie ein FPGA oder ein Speichermedium in Zusammenwirken mit einem Programm handeln. Dabei ist das Programm ausgelegt, die entsprechenden Verfahrensschritte durchzuführen bzw. die notwendigen Rechenoperationen der jeweiligen Einheit anzuwenden. In diesem Kontext können verschiedene elektronische Einheiten des Füllstands-Messgerätes im Sinne der Erfindung potenziell auch auf einen gemeinsamen physikalischen Speicher zurückgreifen bzw. mittels derselben physikalischen Digitalschaltung betrieben werden.

Anhand der nachfolgenden Figuren wird die Erfindung näher erläutert. Es zeigt:
Fig. 1: Eine schematische Anordnung eines Laufzeit-basierten Füllstandsmessgerätes an einem Behälter,
Fig. 2: eine Detailansicht der einzelnen Module des Füllstandsmessgerätes, und
Fig. 3: eine schematische Darstellung des erfindungsgemäßen Kalibrations- Verfahrens für modular aufgebaute Füllstandsmessgeräte.

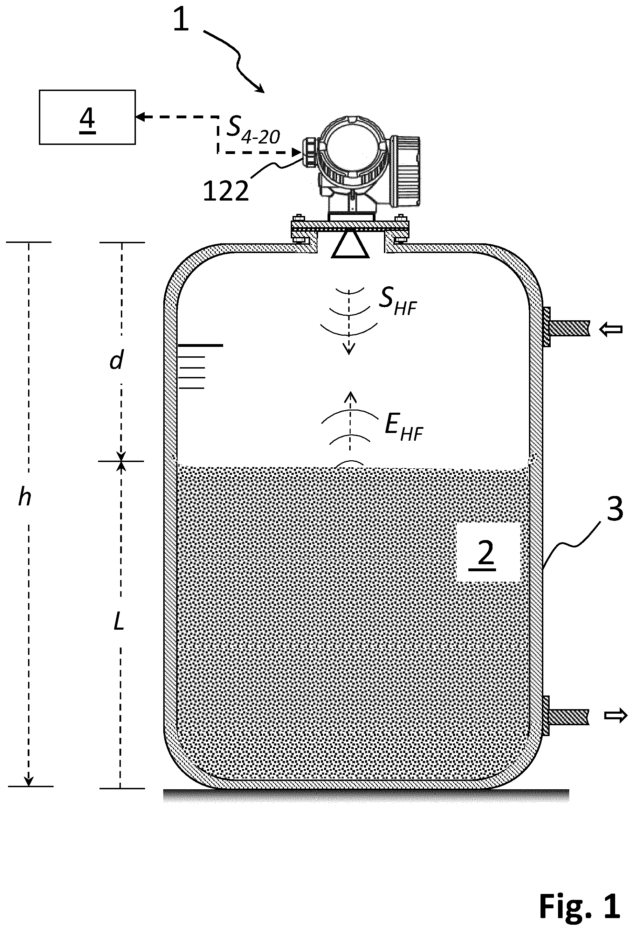

Zum grundsätzlichen Verständnis der Erfindung ist in Fig. 1 ein frei abstrahlendes Füllstandsmessgerät 1 gezeigt, das gemäß eines Radar- oder Ultraschall-Messprinzips arbeitet und an einem Behälter 3 angeordnet ist. Dabei befindet sich in dem Behälter 3 ein Füllgut 2, dessen Füllstand L durch das Füllstandsmessgerät 1 zu bestimmen ist. Zur Bestimmung des Füllstandes L ist das Füllstandsmessgerät 1 in einer bekannten Einbauhöhe h oberseitig am Behälter 3 angebracht.

Da es sich bei Radar- und Ultraschall um Laufzeit-basierte Messprinzipien handelt, ist das Füllstandsmessgerät 1 so konzipiert, dass es ein Radar- bzw. Ultraschall-basiertes Signal S_{HF} in etwa senkrecht in Richtung des Füllgutes 2 sendet. Bei dem in Fig. 1 gezeigten Ausführungsbeispiel umfasst das Füllstandsmessgerät 1 hierfür eine hornförmige Antenne. Im Gegensatz zu dieser skizzierten Ausführungsvariante ist es bei geführtem Radar (*"TDR"*) und bei kapazitiven Messprinzipien üblich, dass das Füllstandsmessgerät 1 anstelle der Antenne eine stab- oder seilförmige Messsonde umfasst, die sich ausgehend vom Füllstandsmessgerät 1 senkrecht bis kurz oberhalb des Behälterbodens erstreckt. Dabei wird das entsprechende Wechselspannungs-Signal S_{HF} in diesem Fall in die Messsonde eingekoppelt.

An der Oberfläche des Füllgutes 2 wird das Signal S_{HF} reflektiert und nach einer korrespondierenden Signallaufzeit vom Füllstandsmessgerät 1 entsprechend als Empfangssignal E_{HF} empfangen. Hierbei hängt die Signallaufzeit des Signals S_{HF}, E_{HF} vom Abstand d des Füllstandsmessgerätes 1 zur Füllgut-Oberfläche ab. Anhand des Empfangssignals E_{HF} wird die Signallaufzeit des Signals S_{HF}, E_{HF} bestimmt. Auf Basis der Signallaufzeit bestimmt das Füllstandsmessgerät 1 wiederum den Abstand d zum Füllgut 2. Die im Füllstandsmessgerät 1 hinterlegte Einbauhöhe h des Füllstandsmessgerätes 1 ermöglicht es, auf Basis des gemessenen Abstandes d gemäß d = h - L den Füllstand L bestimmen. Im Falle des nicht dargestellten kapazitiven Messprinzips bestimmt das Füllstandsmessgerät 1 anstelle des Radar- oder Ultraschall-basierten Empfangssignals E_{HF} als Empfangsgröße eine Impedanz oder eine Eigenfrequenz, aus der die Füllstandsabhängige Kapazität der Messsonde und somit wiederum der Abstand d - bzw. die nicht vom Füllgut benetzte Strecke der Messsonde - bestimmt werden kann.

Wie bei Feldgeräten allgemein üblich, ist das Füllstandsmessgerät 1 über eine Schnittstelle 122, wie etwa "4-20 mA", "Ethernet", "PROFIBUS", "HART" oder "Wireless HART" mit einer übergeordneten Einheit 4, beispielsweise einem Prozessleitsystem oder einer dezentralen Datenbank verbunden. Hierüber kann primär der Füllstandswert L übermittelt werden, um gegebenenfalls am Behälter 3 vorhandene Zu- oder Abflüsse zu steuern. Darüber hinaus können jedoch auch Informationen über den Betriebszustand des Füllstandsmessgerätes 1 kommuniziert werden.

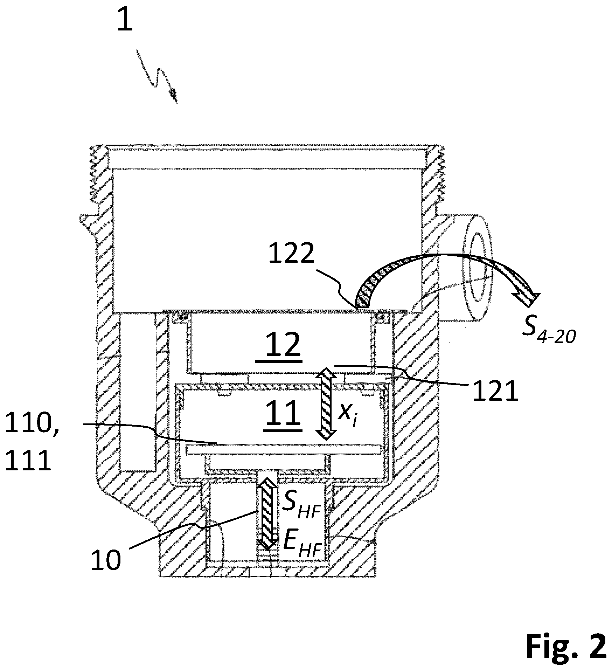

Die einzelnen Funktionen des Füllstandsmessgerätes 1 sind entsprechenden Modulen zugeordnet: Dabei sind die innerhalb des Geräte-Gehäuses angeordneten Module in Fig. 2 schematisch dargestellt. Zur Kommunikation mit der übergeordneten Einheit 4 ist die Schnittstelle 122 des Füllstandsmessgerätes 1 Bestandteil eines bei verschiedensten Feldgeräte-Typen einsetzbaren Elektronik-Moduls 12. Neben der Übertragung peripherer Daten ermöglicht dieses Modul 12 primär, den Füllstandswert L als standardisiertes Messwertsignal S₄₋₂₀ gemäß eines der zuvor genannten Protokolle ("4-20 mA", "Ethernet", "PROFIBUS", "HART" oder "Wireless HART") an die übergeordnete Einheit 4 zu übermitteln. Da zur Ermittlung des Füllstandes L neben dem Abstandswert d die Einbauhöhe h des Füllstandsmessgerätes 1 bekannt sein muss, umfasst das Elektronik-Modul 12 einen vordefinierten Speicher zur Hinterlegung der Einbauhöhe h. Zur Eingabe der Einbauhöhe h kann das Elektronik-Modul 12 bspw. mit einem nicht explizit in Fig. 2 dargestellten Eingabe-Modul wie beispielsweise einem Touchscreen verbunden sein.

Den Abstandswert d erhält das Elektronik-Modul 12 von einem Sensor-Modul 11 als ggf. bereits digitalisiertes Sensorsignal x über eine zweite Schnittstelle 121. Dabei ist das Sensor-Modul 11 im Geräte-Gehäuse unterhalb des Elektronik-Moduls 12 angeordnet. Zur Generierung des Sensorsignals x wandelt eine Auswertungs-Einheit 111 des Sensor-Moduls 11 das Empfangssignal E_{HF} gemäß des Puls-Laufzeit-Prinzips oder gemäß des FMCW-Prinzips entsprechend um. Damit die Auswertungs-Einheit 111 die im Empfangssignal E_{HF} enthaltene Laufzeit-Information dem Abstand d zur Füllgut-Oberfläche korrekt zuordnen kann, greift sie bei der Umwandlung des Empfangssignals E_{HF} in das Sensorsignal x auf eine pro Füllstandsmessgerät 1 individuell hinterlegte Kalibrierfunktion dᵢ(E_{HF,i}) zurück. Auch im Falle von TDR oder kapazitiver Füllstandsmessung ist eine entsprechende Kalibrierfunktion dᵢ(E_{HF,i}) erforderlich, damit die Auswertungs-Einheit 111 die entsprechende Empfangsgröße E_{HF} korrekt der nicht vom Füllgut 2 benetzten Strecke der Messsonde - dies entspricht bei Messsonden dem Abstand d zum Füllgut 2 - zuordnen kann. Dadurch ist unabhängig vom implementierten Messprinzip sichergestellt, dass das Sensorsignal x den Abstand d des Füllstandsmessgerätes 1 zur Oberfläche des Füllgutes 2 korrekt beinhaltet.

Die in Fig. 1 angedeutete Hornantenne des Füllstandsmessgerätes 1, mittels der das Radar- bzw. Ultraschall-Signal S_{HF} gen Füllgut 2 übertragen und nach Reflektion als Empfangssignal E_{HF} empfangen wird, ist Bestandteil eines Übertragungs-Moduls 10. Wie in Fig. 2 skizziert ist, befindet sich das Übertragungs-Modul 10 im fertig montierten Zustand unterhalb des Sensor-Moduls 11 und wird von diesem mittels eines entsprechenden Wechselspannungs-Signals S_{HF} angesteuert. Dabei richtet sich die Frequenz des Wechselspannungs-Signals S_{HF} nach dem jeweiligen Messprinzip: Im Fall von frei abstrahlendem Radar und TDR liegt die Frequenz des Wechselspannungs-Signals S_{HF} im Bereich zwischen 0.03 GHz und 300 GHz, während die Frequenz bei Ultraschall zwischen 14 kHz und 1 GHz liegt. Je nach kapazitivem Messprinzip weist das Wechselspannung-Signal S_{HF} eine Frequenz zwischen 0,5 kHz und 5 kHz auf. Zur Erzeugung des Wechselspannungs-Signals S_{HF} umfasst das Sensor-Modul 11 eine nicht näher dargestellte Signalerzeugungs-Einheit 110, die das Wechselspannungs-Signal S_{HF} gemäß des entsprechenden Messprinzips erzeugt und in das Übertragungs-Modul 10 einkoppelt.

Der modulare Aufbau erleichtert es einerseits, das Füllstandsmessgerät 1 je nach Einsatzgebiet individuell anzupassen, beispielsweise indem das Übertragungsmodul 10 mit einer auf die Einbauhöhe h angepassten Antenne oder Messsonde ausgelegt wird. Andererseits sind einzelne Module des Füllstandsmessgerätes 1, wie insbesondere das Elektronik-Modul 12, auch in weiteren Feldgeräte-Typen einsetzbar. Dies reduziert die Anzahl an erforderlichen Fertigungslinien.

Durch den modularen Aufbau bzw. die individuelle Auslegbarkeit wird jedoch die Kalibrierung des Füllstandsmessgerätes 1 komplexer, da sie sich auf das gesamte Füllstandsmessgerät 1 und die Behälter-Geometrie bezieht, während auf die Kalibration 100 einzelner Module wie insbesondere der Kalibrierung des Sensor-Moduls 11 nicht verzichtet werden kann. Dies betrifft vor allem auch die etwaige Erstellung eines Kalibrierprotokolls [dᵢ; dᵢⱼ].

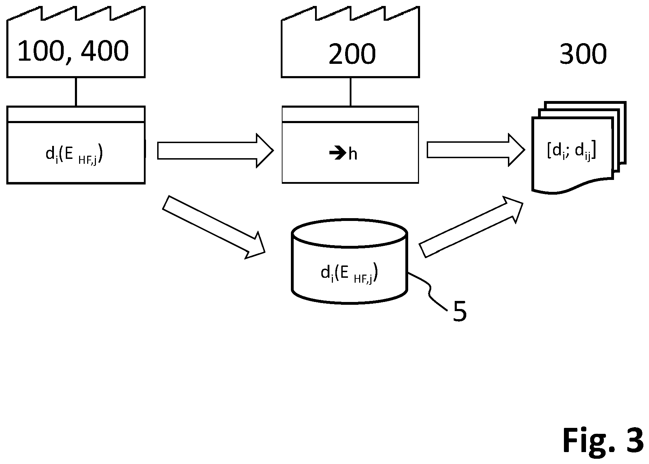

Ein erfindungsgemäßer Verfahrensablauf, mit dem der Kalibrier-Aufwand im Zusammenhang mit der Fertigung von modular aufgebauten Füllstandsmessgeräten 1 gering gehalten wird, ist in Fig. 3 schematisch dargestellt: Voraussetzung für die Kalibration 100 ist hierbei, dass zunächst das Übertragungs-Modul 10 und das Sensor-Modul 11 elektrisch bzw. mechanisch miteinander verbunden werden. Danach erfolgt die Kalibration 100 des Sensor-Moduls 11 mitsamt des spezifischen Übertragungs-Moduls 10 auf einer Kalibrations-Messstrecke. Dabei hat die Kalibrations-Messstrecke einen Reflektor zu umfassen, der anstelle der Füllgut-Oberfläche in definierten Abständen dᵢ zwischen bspw. 1 m und 25 m Abstand zum Füllstandsmessgerät 1 aufgestellt werden kann. Näher beschrieben ist eine entsprechende Messstrecke für frei abstrahlende Radar-Messgeräte beispielsweise in der Veröffentlichungsschrift EP 03390982 A1.

Auf der Messstrecke wird die Kalibration 100 des Sensor-Moduls 11 durchgeführt, indem die Signalerzeugungs-Einheit 110 des Sensor-Moduls 11 das Wechselspannungs-Signal S_{HF} bei einer definierten Anzahl i an verschiedenen Abständen dᵢ des Füllstandsmessgerätes 1 zum Reflektor 2 erzeugt, so dass über das Übertragungs-Modul 10 die entsprechenden Radar- bzw. Ultraschall-Signale S_{HF,i} bei den verschiedenen Abständen dᵢ zum Reflektor gesendet werden. Korrespondierend hierzu empfängt die Auswertungs-Einheit 111 des Sensor-Moduls 11 über das Übertragungs-Modul 10 die zugehörigen Empfangssignale E_{HF,i}. Dabei werden die erfassten Empfangssignale E_{HF,i} mitsamt der korrespondierenden Abstände dᵢ abgespeichert. Dies kann entweder in der Auswertungs-Einheit 111 selbst, oder in einer externen Speicher-Einheit 5 erfolgen. Auf Basis dieser Daten erstellt und speichert die Auswertungs-Einheit 111 des Sensor-Moduls 11 die Kalibrierfunktion dᵢ(E_{HF,i}). Dabei kann die Kalibrierfunktion dᵢ(E_{HF,i}) in Form einer analytischen Funktion erstellt werden, beispielsweise mittels eines Approximations-Algorithmus, oder die Kalibrierfunktion dᵢ(E_{HF,i}) wird als reine Look-up Table abgespeichert. In beiden Fällen steigt die Genauigkeit der Kalibration 100 mit der Anzahl i an eingestellten Abständen dᵢ. Damit diese Schritte der Kalibration 100 am Sensor-Modul 11 durchführbar sind, muss das Sensor-Modul 11 so konzipiert werden, dass es hierzu in einen entsprechenden Kalibrier-Modus versetzbar ist.

Darüber hinaus kann die Genauigkeit der Kalibration 100 weiter erhöht werden, indem sie um eine Temperaturkompensation 400 erweitert wird. Der Begriff *"Temperaturkompensation"* bedeutet in diesem Zusammenhang, dass der Abstandswert d, welcher vom Sensorsignal x repräsentiert wird, durch eine von Raumtemperatur abweichende Umgebungstemperatur nicht verfälscht wird. Voraussetzung dafür, dass das Füllstandsmessgerät 1 eine Kompensation umsetzen kann, ist, dass das Füllstandsmessgerät 1 bzw. das Sensor-Modul 11 die Umgebungstemperatur messen kann, bspw. mittels eines entsprechend integrierten PT 100. Die Temperaturkompensation kann auf der Messstrecke entweder im Rahmen einer eigenständigen Messreihe durchgeführt werden, oder im Rahmen der zuvor beschriebenen Kalibrations-Messreihe.

Dabei wird die Kompensations-Messreihe analog zum Kalibrations-Verfahren durchgeführt, indem die Signalerzeugungs-Einheit 110 das Wechselspannungs-Signal S_{HF} bei mindestens einem der eingestellten Abstände dᵢ unter zumindest zwei verschiedenen Temperaturen Tⱼ erzeugt. Hierzu kann das Sensor-Modul 11 auf der Messstrecke beispielsweise in einer Klimakammer, die das Aussenden des entsprechenden Ultraschall- bzw. Radar-Signals S_{HF} über das Übertragungs-Modul 10 gen Reflektor 2 gewährleistet, untergebracht werden. Dabei ist es empfehlenswert, wenn zumindest zwei der eingestellten Temperaturen Tⱼ an der oberen- und unteren Temperatur-Grenze der Einsatz-Spezifikationen liegen, bspw. bei -15° C und +45° C. Auch die Temperaturkompensation wird umso genauer, bei je mehr Abständen dᵢ unter den zwei (oder sogar mehreren verschiedenen) Temperaturen Tⱼ das Wechselspannungs-Signal S_{HF} erzeugt und ausgesendet wird.

Nach Reflektion des Signals S_{HF} am Reflektor 2 werden wiederum die jeweils korrespondierenden Empfangs-Signale E_{HF} erfasst. Somit kann das Sensor-Modul 11 bzw. die Auswertungs-Einheit 111 anhand dieser Empfangs-Signale E_{HF,i} und anhand der korrespondierenden Temperaturen Tⱼ eine Kompensationsfunktion erstellen. Analog zur Kalibrierfunktion dᵢ(E_{HF,i}) kann auch die Kompensationsfunktion als analytische Funktion oder als reine Lookup-Table erstellt werden. Denkbar ist in diesem Zusammenhang auch, dass die Kompensationsfunktion nicht als eigenständige Funktion erstellt wird, sondern dass die Kalibrierfunktion dᵢ(E_{HF,i}, Tⱼ) auf Basis der Daten aus der Kompensations-Messreihe derart erstellt wird, dass sie als weitere Variable die Umgebungstemperatur enthält. Somit ist es dem Sensor-Modul 11 bei entsprechender Auslegung möglich, die Sensorsignale xᵢ mittels der Kompensationsfunktion (bzw. mittels der erweiterten Kalibrierfunktion dᵢ(E_{HF,i}, Tⱼ)) und der gemessenen Umgebungstemperatur temperaturkompensiert auszugeben.

Neben dem Sensor-Modul 11 müssen erfindungsgemäß keine weiteren Module kalibriert werden. Gleichzeitig hat das erfindungsgemäße Verfahren den Vorteil, dass das Elektronik-Modul 12 bei der Kalibration des Sensor-Moduls 11 nicht angeschlossen sein muss. Dies kann nachträglich in der Endmontage des Füllstandsmessgerätes 1, also ggf. an einem anderen Standort, erfolgen. Außerdem muss das Einlernen 200 des Elektronik-Moduls 12 bezüglich der Einbauhöhe h nicht bei der Kalibrierung des Sensor-Moduls 11 erfolgen.

Gleiches gilt für das Erstellen 300 eines Kalibrierprotokolls [dᵢ; dᵢⱼ], wobei hierzu zuerst eine separate Protokollier-Messreihe des bereits kalibrierten Sensor-Moduls 11 auf der Messtrecke durchgeführt werden muss: Zunächst müssen wiederum bei einem oder mehreren definiert eingestellten Abständen dⱼ jeweils ein Wechselspannungs-Signal S_{HF} durch die Signalerzeugungs-Einheit 110 erzeugt und mittels des Übertragungs-Moduls 10 zum Reflektor 2 gesendet werden. Nach Empfang der korrespondierenden Empfangs-Signale E_{HF,i} über das Übertragungs-Modul 10 erzeugt die Auswertungs-Einheit 111 anhand des Empfangs-Signals E_{HF,j} und anhand der bereits erstellten Kalibrierfunktion dᵢ(E_{HF,i}) die resultierenden Sensorsignale x_{j,j}. Dabei werden die Sensorsignale x_{j,j} im Falle des Kalibrierprotokolls [dᵢ; dᵢⱼ] auf der externen Speicher-Einheit 5 gespeichert. In diesem Zusammenhang muss die Speicher-Einheit 5 nicht zwingend als fester Bestandteil der Messstrecke ausgelegt sein. Bei der Speicher-Einheit 5 kann es kann sich auch um ein mobiles Gerät, wie ein Smartphone oder Tablet PC handeln, das drahtlos mit der Messstrecke, dem Sensor-Modul 11 und/oder dem Elektronik-Modul 12 verbindbar ist.

Damit diese Schritte der Protokoll-Erstellung 300 am Sensor-Modul 11 durchführbar sind, muss das Sensor-Modul 11 wiederum so konzipiert werden, dass es hierzu in einen entsprechenden Protokollier-Modus versetzbar ist.

Im Anschluss an die Protokollier-Messreihe des Sensor-Moduls 11 werden dem Elektronik-Modul 12 zur Protokoll-Erstellung 300 von der externen Speicher-Einheit 5 diejenigen Sensorsignale x_{i,j} übermittelt, die durch die Protokollier-Messreihe des Sensor-Moduls 11 erhalten werden. Dabei ist es in diesem Zusammenhang vorteilhaft, wenn die Speicher-Einheit 5 über die erste Schnittstelle 121 mit dem Elektronik-Modul 12 verbindbar ist. Außerdem ist dem Elektronik-Modul 12 die Einbauhöhe h einzugeben. Unter Einbezug der Einbauhöhe h kann das Elektronik-Modul 12 die erhaltenen Sensorsignale x_{i,j} in entsprechend standardisierte Messwertsignale S_{4-20i,j} umwandeln. Um zur Erstellung des Kalibrierprotokolls [dᵢ; dᵢⱼ] diese zuvor beschriebenen Verfahrensschritte am Elektronik-Modul 12 abrufen zu können, ist auch das Elektronik-Modul 12 so zu konzipieren, dass es bei Bedarf in einen entsprechenden Protokollier-Modus versetzt werden kann.

Die vom Elektronik-Modul 12 im Protokollier-Modus generierten Messwertsignale S_{4.20i,j} werden in die entsprechenden Füllstandswerte L_{i,j} umgerechnet. Hierzu kann das Elektronik-Modul 12 beispielsweise über die zweite Schnittstelle 122 mit einer entsprechend externen Datenverarbeitungs-Einheit verbunden werden. Auch die bei der Messreihe angefahrenen Abstände dⱼ können der Datenverarbeitungs-Einheit entweder manuell eingegeben werden, oder sie wird hierzu mit der entsprechenden Steuerung der Messstrecke verbunden.

Abschließend führt die Datenverarbeitungs-Einheit zur Erstellung 300 des Kalibrierprotokolls [dᵢ; dᵢⱼ] die vom Elektronik-Modul 12 im Protokollier-Modus generierten Messwertsignale S₄₋₂₀ mit den korrespondierenden Abständen dⱼ, die 11 an der Messstrecke bei der Protokollier-Messreihe des Sensor-Moduls 11 eingestellt wurden, zusammen. Dabei erfolgt die Zusammenführung, indem die korrespondierenden Abstände dᵢ, dᵢⱼ bzw. Füllstände Lᵢⱼ abgeglichen werden, so dass eine etwaige Abweichung zwischen den korrespondierenden Werten ersichtlich wird. Dies wird als Kalibrierprotokoll [dᵢ; dᵢⱼ] beispielsweise in Papierform oder entsprechend elektronisch dokumentiert. Vorteilhaft an diesem erfindungsgemäßen Verfahren zur Erstellung des Kalibrierprotokolls [dᵢ; dᵢⱼ] ist wiederum, dass das Sensor-Modul 11 und das Elektronik-Modul zum Zeitpunkt der Durchführung der Protokollier-Messreihe nicht verbunden sein müssen. Dies wirkt sich insofern vorteilhaft auf die Fertigung des Füllstandsmessgerätes 1 aus, als dass am Standort der Endfertigung im Gegensatz zum Standort der Sensor-Modul-Fertigung keine kostenintensive Messstrecke vorgehalten werden muss.

### Bezugszeichenliste

- 1: Füllstandsmessgerät
- 2: Reflektor/Füllgut
- 3: Behälter
- 4: Übergeordnete Einheit
- 5: Externe Speicher-Einheit
- 10: Übertragungs-Modul
- 11: Sensor-Modul
- 12: Elektronik-Modul
- 100: Kalibrieren des Sensor-Moduls
- 110: Signalerzeugungs-Einheit
- 111: Auswertungs-Einheit
- 121: Erste Schnittstelle
- 122: Zweite Schnittstelle
- 200: Einlernen des Elektronik-Moduls
- 300: Erstellen des Kalibrierprotokolls
- 400: Kompensieren des Sensor-Moduls
- d: Abstand
- [dᵢ; dᵢⱼ]: Kalibrierprotokoll
- dᵢ(E_{HF,i}): Kalibrierfunktion
- E_{HF}: Empfangsgröße
- h: Einbauhöhe
- i, j: Anzahl eingestellter Reflektor-Abstände
- L: Füllstand
- S_{HF}: Signal
- S₄₋₂₀: Messwertsignal
- Tⱼ: Temperaturen bei der Kompensation
- xᵢ: Sensorsignal

## Patentansprüche

1. Verfahren zur Fertigung und Kalibration eines modular aufgebauten Füllstandsmessgerätes (1), das auf einem Ultraschall- oder Radar-basierten Messprinzip beruht und folgende Komponenten umfasst:
- Ein Übertragungs-Modul (10), in welches ein Wechselspannungs-Signal (S_{HF}) derart einkoppelbar ist, so dass das Signal (S_{HF}) in Richtung eines Reflektors (2) übertragen und nach Reflektion als entsprechende Empfangsgröße (E_{HF}) empfangen wird,
- Ein Sensor-Modul (11), mit
∘ Einer Signalerzeugungs-Einheit (110), die ausgelegt ist, das Wechselspannungs-Signal (S_{HF}) gemäß des entsprechenden Messprinzips zu erzeugen, und
∘ einer Auswertungs-Einheit (111), die ausgelegt ist, um die Empfangsgröße (E_{HF}) mittels einer Kalibrierfunktion (dᵢ(E_{HF,i})) in ein Sensorsignal (xᵢ), das einen Abstand (dᵢ) des Füllstandsmessgerätes (1) zum Reflektor (2) repräsentiert, umzuwandeln, und
- ein Elektronik-Modul (12), das ausgelegt ist, das Sensorsignal (xᵢ) unter Einbezug einer bekannten Einbauhöhe (h) in ein standardisiertes Messwertsignal (S₄₋₂₀), das den Füllstand (L) repräsentiert, umzuwandeln, mit
∘ einer ersten Schnittstelle (121) zur Auswertungs-Einheit (111), um das Sensorsignal (xᵢ) zu empfangen, und
∘ einer zweiten Schnittstelle (122), die ausgelegt ist, das Messwertsignal (S₄₋₂₀) an eine übergeordnete Einheit (4) auszugeben,
folgende Verfahrensschritte umfassend:
- Verbinden des Übertragungs-Moduls (10) mit dem Sensor-Modul (11),
- Kalibration (100) des Sensor-Moduls (11), indem
∘ das Wechselspannungs-Signal (S_{HF}) bei zumindest einem definierten Abstand (dᵢ) des Füllstandsmessgerätes (1) zum Reflektor (2) übertragen wird,
∘ jeweils die entsprechende Empfangsgröße (E_{HF,i}) erfasst wird, und
∘ auf Basis der zumindest einen erfassten Empfangsgröße (E_{HF,i}) und des jeweils korrespondierenden Abstands (dᵢ) die Kalibrierfunktion (dᵢ(E_{HF,i})) erstellt wird,
- Einlernen (200) des Elektronik-Moduls (12), indem
∘ die Einbauhöhe des Füllstandsmessgerätes (h) eingegeben wird,
**dadurch gekennzeichnet, dass** ein Anschließen des Elektronik-Moduls (12) an das Sensor-Modul (11) erst bei der Endmontage oder am Einsatzort erfolgt, und dass bei der Kalibration (100) des Sensor-Moduls (11) das Elektronik-Modul (12) nicht angeschlossen ist.

2. Verfahren nach Anspruch 1, wobei das Wechselspannungs-Signal (S_{HF}) zur Kalibration (100) des Sensor-Moduls (11) bei zwei oder mehreren definierten Abständen (dᵢ) des Füllstandsmessgerätes (1) zum Reflektor (2) übertragen wird, und wobei die Kalibrierfunktion (dᵢ(E_{HF,i})) auf Basis dieser Abstände (dᵢ) und der korrespondierenden Empfangsgrößen (E_{HF,i}) erstellt wird.

3. Verfahren nach Anspruch 1 oder 2, folgenden zusätzlichen Verfahrensschritt umfassend:
- Erstellen (300) eines Kalibrierprotokolls ([dᵢ; dᵢⱼ]), indem
∘ das Signal (S_{HF}) bei zumindest einem definiert eingestellten Abstand (dⱼ) zum Reflektor (2) übertragen und nach Reflektion die entsprechende Empfangsgröße (E_{HF,j}) empfangen wird,
∘ anhand der Empfangsgröße (E_{HF,j}) und der Kalibrierfunktion (dᵢ(E_{HF,i})) das Sensorsignal (x_{j,j}) erzeugt wird,
∘ das Sensorsignal (x_{i,j}) unter Einbezug einer bekannten Einbauhöhe (h) in das standardisierte Messwertsignal (S₄₋₂₀) umgewandelt wird,
∘ der zumindest eine Füllstandswert (L_{i,j}), der durch das Messwertsignal (S₄₋₂₀) repräsentiert wird, mit dem definiert eingestellten Abstand (dⱼ) abgeglichen wird.

4. Verfahren nach Anspruch 3, wobei das vom Sensor-Modul (11) erzeugte Sensorsignal (x_{j,j}) auf einer externen Speicher-Einheit (5) gespeichert wird, und
und wobei dem Elektronik-Modul (12) das jeweilige Sensorsignal (x_{i,j}) insbesondere über die erste Schnittstelle (121) von der externen Speicher-Einheit (5) übermittelt wird.

5. Verfahren nach einem der vorhergehenden Ansprüche, wobei das Elektronik-Modul (12) ausgelegt ist, das Messwertsignal (S₄₋₂₀) gemäß des 4-20 mA Standards zu erzeugen.

6. Verfahren nach einem der vorhergehenden Ansprüche, wobei das Sensor-Modul (11) ausgelegt ist, das Sensorsignal (xᵢ) als digitales Signal zu erzeugen, und wobei das Elektronik-Modul (12) ausgelegt ist, das digitale Sensorsignal (xᵢ) entsprechend [über die erste Schnittstelle (121) zu empfangen bzw.] zu verarbeiten.

7. Verfahren nach zumindest einem der vorhergehenden Ansprüche, wobei bei der Kalibration (100) des Sensor-Moduls (11) eine Temperaturkompensation (400) durchgeführt wird, indem
∘ das Signal (S_{HF}) bei zumindest einem definierten Abstand (dᵢ) unter zumindest zwei verschiedenen Temperaturen (Tⱼ) erzeugt wird,
∘ nach Reflektion die jeweils entsprechende Empfangsgröße (E_{HF}) erfasst wird,
∘ und indem zumindest anhand der Empfangsgrößen (E_{HF,i}) und anhand der korrespondierenden Temperaturen (Tⱼ) eine Kompensationsfunktion erstellt wird,
wobei das Sensor-Modul (11) ausgelegt ist, die Umgebungstemperatur zu messen, und wobei die Sensoreinheit (12) ausgelegt ist, die Sensorsignale (xᵢ) mittels der Kompensationsfunktion und der gemessenen Umgebungstemperatur temperaturkompensiert auszugeben.

## Claims

1. A method for producing and calibrating a modular fill level measuring device (1) which uses an ultrasound-based or radar-based measuring principle and comprises the following components:
- A transmission module (10) into which an AC signal (S_{HF}) can be coupled in such a way that the signal (S_{HF}) is transmitted toward a reflector (2) and is received as a corresponding received variable (E_{HF}) after reflection,
- A sensor module (11), with
∘ a signal generating unit (110) which is configured to generate the AC signal (S_{HF}) in accordance with the corresponding measuring principle, and
∘ an evaluation unit (111) which is configured to convert the received variable (E_{HF}) into a sensor signal (xᵢ) which represents a distance (di) between the fill level measuring device (1) and the reflector (2) by means of a calibration function (dᵢ(E_{HF,i})), and
- An electronic module (12) which is configured to convert the sensor signal (xᵢ) into a standardized measured value signal (S₄₋₂₀) which represents the fill level (L) including a known installation height (h), with
∘ a first interface (121) with the evaluation unit (111) for receiving the sensor signal (xᵢ), and
∘ a second interface (122) which is configured to output the measured value signal (S₄₋₂₀) to a higher-level unit (4),
comprising the following process steps:
- Connecting the transmission module (10) to the sensor module (11),
- Calibrating (100) the sensor module (11) by
∘ transmitting the AC signal (S_{HF}) at one or more defined distances (di) between the fill level measuring device (1) and the reflector (2),
∘ detecting the corresponding received variable (E_{HF,i}) in each case, and
∘ creating the calibration function ((dᵢ(E_{HF,i})) based on the at least one detected received variable (E_{HF,i}) and the corresponding distance (di) in each case,
- Calibrating (200) the electronic module (12) by
∘ inputting the installation height of the fill level measuring device (h), **characterized in that** the electronic module (12) is only connected to the sensor module (11) during final assembly or at the installation site, and **in that** the electronic module (12) is not connected during calibration (100) of the sensor module (11).

2. The method as claimed in claim 1, wherein the AC signal (S_{HF}) for the calibration (100) of the sensor module (11) is transmitted at two or more defined distances (di) between the fill level measuring device (1) and the reflector (2), and wherein the calibration function (dᵢ(E_{HF,i})) is created on the basis of these distances (di) and the corresponding received variables (E_{HF,i}).

3. The method as claimed in claim 1 or 2, comprising the following additional process step:
- Creating (300) a calibration log ([di; dij]) by
∘ transmitting the signal (S_{HF}) at one or more defined, set distances (di) from the reflector (2) and receiving the corresponding received variable (E_{HF,j}) after reflection,
∘ generating the sensor signal (x_{j,j}) based on the received variable (E_{HF,j}) and the calibration function (dᵢ(E_{HF,i})),
∘ converting the sensor signal (x_{i,j}) into the standardized measured value signal (S₄₋₂₀) including a known installation height (h),
∘ comparing the at least one fill level value (Li,j), which is represented by the measured value signal (S₄₋₂₀), with the defined, set distance (dj).

4. The method as claimed in claim 3, wherein the sensor signal (x_{i,j}) generated by the sensor module (11) is saved on an external memory unit (5), and wherein the respective sensor signal (x_{i,j}) is transmitted to the electronic module (12) by the external memory unit (5), in particular via the first interface (121).

5. The method as claimed in one of the preceding claims, wherein the electronic module (12) is configured to generate the measured value signal (S₄₋₂₀) according to the 4-20 mA standard.

6. The method as claimed in one of the preceding claims, wherein the sensor module (11) is configured to generate the sensor signal (xᵢ) as a digital signal, and wherein the electronic module (12) is configured [to receive the digital sensor signal (xᵢ) via the first interface (121) and] to process the digital sensor signal (xᵢ) accordingly.

7. The method as claimed in at least one of the preceding claims, wherein temperature compensation is performed (400) when calibrating (100) the sensor module (11) by
∘ generating the signal (S_{HF}) at one or more defined distances (di) at two or more different temperatures (Tⱼ),
∘ detecting the corresponding received variable (E_{HF}) after reflection in each case,
∘ and creating a compensation function based as a minimum on the received variables (E_{HF,i}) and based on the corresponding temperatures (Tⱼ),
wherein the sensor module (11) is configured to measure the ambient temperatures, and wherein the sensor unit (12) is configured to output the temperature-compensated sensor signals (xᵢ) using the compensation function and the measured ambient temperature.

## Revendications

1. Procédé destiné à la fabrication et à l'étalonnage d'un transmetteur de niveau (1) de conception modulaire, lequel transmetteur repose sur un principe de mesure basé sur les ultrasons ou le radar et lequel transmetteur comprend les composants suivants :
- un module de transmission (10) dans lequel un signal de tension alternative (S_{HF}) peut être couplé de telle sorte que le signal (S_{HF}) est transmis en direction d'un réflecteur (2) et reçu après réflexion comme grandeur de réception correspondante (EHF),
- un module capteur (11), avec
∘ une unité de génération de signal (110), laquelle est conçue pour générer le signal de tension alternative (S_{HF}) selon le principe de mesure correspondant, et
∘ une unité d'évaluation (111), laquelle est conçue pour convertir la grandeur de réception (E_{HF}) au moyen d'une fonction d'étalonnage en un signal de capteur (xᵢ), lequel signal représente une distance (dᵢ) du transmetteur de niveau (1) par rapport au réflecteur (2), et
- un module électronique (12), lequel est conçu pour convertir le signal de capteur (xᵢ) en tenant compte d'une hauteur de montage connue (h) en un signal de valeur mesurée standardisé (S₄₋₂₀) qui représente le niveau (L), avec
∘ une première interface (121) vers l'unité d'évaluation (111) pour recevoir le signal de capteur (xᵢ), et
∘ une deuxième interface (122), laquelle est conçue pour émettre le signal de valeur mesurée (S₄₋₂₀) vers une unité supérieure (4),
lequel procédé comprend les étapes suivantes :
- Connexion du module de transmission (10) au module capteur (11),
- Étalonnage (100) du module capteur (11) en ce que
∘ le signal de tension alternative (S_{HF}) est transmis à au moins une distance (dᵢ) définie du transmetteur de niveau (1) vers le réflecteur (2),
∘ la grandeur de réception correspondante (E_{HF,i}) est respectivement mesurée, et
∘ la fonction d'étalonnage (dᵢ(E_{HF,i})) est établie sur la base de l'au moins une grandeur de réception détectée (E_{HF,i}) et de la distance (dᵢ) respectivement correspondante,
- Apprentissage (200) du module électronique (12), en ce que
∘ la hauteur de montage du transmetteur de niveau (h) est saisie,
**caractérisé en ce**
**qu'**un raccordement du module électronique (12) au module de capteur (11) n'est effectué que lors du montage final ou sur le lieu d'utilisation, et **en ce que** lors de l'étalonnage (100) du module capteur (11), le module électronique (12) n'est pas raccordé.

2. Procédé selon la revendication 1, pour lequel le signal de tension alternative (S_{HF}) est transmis pour l'étalonnage (100) du module capteur (11) à deux ou plusieurs distances (dᵢ) définies du transmetteur de niveau (1) par rapport au réflecteur (2), la fonction d'étalonnage étant établie sur la base de ces distances (dᵢ) et des grandeurs de réception (E_{HF,i}) correspondantes.

3. Procédé selon la revendication 1 ou 2, lequel procédé comprend l'étape de procédé supplémentaire suivante :
- Établissement (300) d'un protocole d'étalonnage ([dᵢ ; dⱼ]) en ce que
∘ le signal (S_{HF}) est transmis à au moins une distance (dⱼ) réglée de manière définie par rapport au réflecteur (2) et la grandeur de réception (E_{HF,j}) correspondante est reçue après réflexion,
∘ le signal de capteur (x_{j,j}) est généré à l'aide de la grandeur de réception (E_{HF,j}) et de la fonction d'étalonnage (dᵢ(E_{HF,i})),
∘ le signal de capteur (X_{i,j}) est converti en signal de valeur mesurée standardisé (S₄₋₂₀) en tenant compte d'une hauteur de montage connue (h),
∘ l'au moins une valeur de niveau (L_{i,j}) représentée par le signal de valeur mesurée (S₄₋₂₀) est comparée avec la distance (dⱼ) réglée de manière définie.

4. Procédé selon la revendication 3,
pour lequel le signal de capteur (x_{j,j}) généré par le module capteur (11) est mémorisé sur une unité de mémoire externe (5), et
pour lequel le signal de capteur (x_{i,j}) respectif est transmis au module électronique (12) par l'unité de mémoire externe (5), notamment par l'intermédiaire de la première interface (121).

5. Procédé selon l'une des revendications précédentes, pour lequel le module électronique (12) est conçu pour générer le signal de valeur mesurée (S₄₋₂₀) conformément à la norme 4-20 mA.

6. Procédé selon l'une des revendications précédentes,
pour lequel le module capteur (11) est conçu pour générer le signal de capteur (xᵢ) sous la forme d'un signal numérique, et
pour lequel le module électronique (12) est conçu [pour recevoir via la première interface (121) ou] traiter le signal capteur numérique (xᵢ) de manière correspondante.

7. Procédé selon au moins l'une des revendications précédentes, pour lequel, lors de l'étalonnage (100) du module capteur (11), on effectue une compensation de température (400), en ce que
∘ le signal (S_{HF}) est généré à au moins une distance (dᵢ) définie sous au moins deux températures (Tⱼ) différentes,
∘ après réflexion, on détecte la grandeur de réception (E_{HF}) respectivement correspondante,
∘ et en ce qu'une fonction de compensation est générée au moins à l'aide des grandeurs de réception (E_{HF,i}) et à l'aide des températures correspondantes (Tⱼ),
le module capteur (11) étant conçu pour mesurer la température ambiante, et l'unité capteur (12) étant conçue pour délivrer les signaux de capteur (xᵢ) compensés en température au moyen de la fonction de compensation et de la température ambiante mesurée.
